# EUROPEAN PATENT SPECIFICATION

(11) **EP 2 010 808 B1**
(45) Date of publication and mention of the grant of the patent: **09.11.2016**
(21) Application number: 07761431.1
(22) Date of filing: 27.04.2007
(51) Int. Cl.: F16K 15/20, A47C 27/08

(54) **DOUBLE LOCK VALVE FOR INFLATABLES**
DOPPELSPERRVENTIL FÜR SCHLAUCHBOOTE
VALVE DE FERMETURE DOUBLE POUR DISPOSITIFS GONFLABLES

(30) Priority: 27.04.2006 US 745764 P; 02.04.2007 US 909669 P
(43) Date of publication of application: 07.01.2009
(73) Proprietor: The Coleman Company, Inc., Wichita, KS 67219 (US)
(72) Inventor: KELLY, Luke, E., Augusta, Kansas 67010 (US)
(74) Representative: Verriest, Philippe
(86) International application number: PCT/US2007/067605
(87) International publication number: WO 2007/127907

(56) References cited:
- US-A- 4 004 614
- US-A- 5 351 711
- US-B1- 6 386 247
- US-B1- 6 386 247
- US-B1- 6 460 560
- US-B1- 6 460 560
- US-B2- 6 615 829
- US-B2- 6 615 829

## Description

### REFERENCE TO RELATED APPLICATIONS

This application claims priority to U.S. provisional patent application serial Number 60/745,764, filed April 27, 2006 and U.S. provisional patent application serial Number 60/909,669, filed April 2, 2007.

### TECHNICAL FIELD OF THE INVENTION

The present invention is directed to inflatable products, and more specifically to a valve for an inflatable product.

### BACKGROUND OF THE INVENTION

An airbed is a large rectangular rubber or plastic bag that is filled with air so that it may be used as a bed. An air mat is similar in construction to an airbed, but is used as a float so that an individual may lie on the air mat in the water. Both products fall under the broad category of "inflatable" products. Other nonlimiting examples of inflatable products include rafts, inflatable furniture, inflatable pools, and inflatable boats.

One thing inflatable products have in common is that they must be inflated for use. To this end, a valve or valves are supplied on an inflatable product for a user to provide air or another gas into the inflatable product. The user may utilize his or her breath, i.e., by blowing into a valve or valves, may utilize a manual or electric pump, or may use an air compressor, as examples.

A variety of different valves are presently used for inflatable products. These valves have a common goal: to permit the user to easily inflate and deflate the product, while minimizing escaped air when the user tries to seal the product. Examples of present day valves are the pinch valve, the Boston valve, and a double lock valve sold by the assignee of the present invention, The Coleman Company, Inc.

While present valves work well for their intended purpose, very few valves are useful in both allowing simple inflation and deflation of the product and allowing quick closure so that air is not lost from the inflatable product after the inflatable product is full. That is, for most prior art valves, when a user has inflated a product, a cap or other structure must be placed over the valve before air is lost. Often, a substantial amount of air is lost before the valve is sufficiently closed. Additionally, the valve may be difficult to use for deflation of the inflatable product.

### SUMMARY OF THE INVENTION

The following presents a simplified summary of some embodiments of the invention in order to provide a basic understanding of the invention. This summary is not an extensive overview of the invention. It is not intended to identify key/critical elements of the invention or to delineate the scope of the invention. Its sole purpose is to present some embodiments of the invention in a simplified form as a prelude to the more detailed description that is presented later.

In accordance with an embodiment, a valve is provided for an inflatable product. The valve includes an outer piece having a flexible cone or webbing that permits the outer piece of the valve to collapse into an inner piece of the valve. The outer piece includes a spout that fits onto a plug on the inner piece. The outer piece also includes an internal cylindrical flange that extends downward from the inside of the flexible cone and fits onto the plug.

In accordance with an embodiment, a cap is connected to the valve via a flap. The cap is a separate structure from the flap, and is formed of a more rigid material than the flap. The cap fits into the spout to provide a second, separate locking function.

In accordance with an embodiment, the cap may include a structure that may snap onto the plug, locking the valve into a double lock position.

In accordance with an embodiment, the cap may include a structure, such as threads, allowing it to screw into or onto the plug, locking the valve into a double lock position.

Other features of the invention will become apparent from the following detailed description when taken in conjunction with the drawings, in which:

### BRIEF DESCRIPTION OF THE DRAWINGS

FIGURE 1 is a sectional view of a prior art inflating valve;
FIG. 2 is an exploded view of the valve shown in FIG. 1;
FIG. 3 is a sectional view of the valve of FIG. 1, with the valve in an opened position;
FIG. 4 is a sectional view of a valve in accordance with an embodiment;
FIG. 5 is a exploded isometric view of the valve of FIG. 4;
FIG. 6 is a bottom perspective view of the valve of FIG. 4; and
FIG. 7 is a top perspective view of the valve of FIG. 4.
FIG. 8 is a sectional view of a valve in accordance with an embodiment.

### DETAILED DESCRIPTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described.

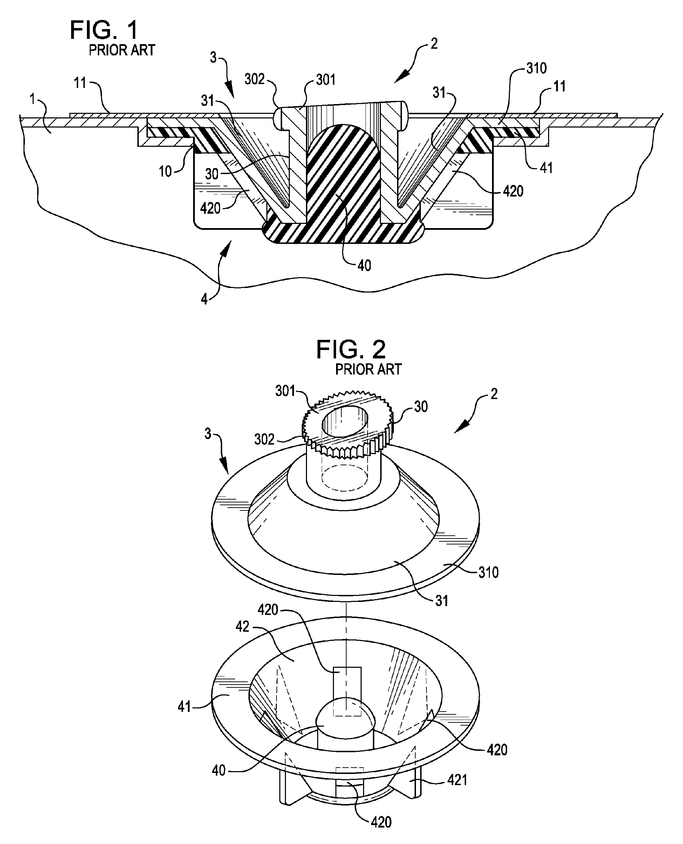

Referring to FIGS. 1 and 2, a prior art inflating valve 2 is shown to comprise an outer piece 3 and an inner piece 4 which are disposed in a mounting hole 10 of a wall of an inflatable 1, for example, a cushion, a swimming ring, an airbed, or the like, and which are attached to the wall of the inflatable 1 and a fixing layer 11. The prior art valve 2 shown in FIGS. 1 and 2 is disclosed in Canadian published application number 2,238,593.

The outer piece 3 is made of a flexible plastic material and comprises a central tubular spout 30, a flexible web portion 31 formed around the tubular spout 31, and a peripheral flange 310 formed around the web portion 31 for cementing to the wall of the inflatable 1. The web portion 31 has a frusto-conical shape and includes a wider end connected to the peripheral flange 310 and a narrower end connected to the tubular spout 30. The web portion 31 is capable of flexing at the wider end to project into or outward of the inflatable 1.

The inner piece 4 is made of a plastic material more rigid than that used for the outer piece 3, and comprises a central plug 40 to be press fitted in the tubular spout 30, a web portion 42 formed around the central plug 40, and a peripheral flange 41 formed around the web portion 42 for cementing to the peripheral flange 310 and the wall of the inflatable 1. The web portion 42 is generally frusto-conical and projects inwardly from the peripheral flange 41. The wider outer end of the web portion 42 is connected to the peripheral flange 41, and the narrower inner end thereof is connected to an inner end of the central plug 40, thereby holding the central plug 40 within the interior space of the web portion 42. A plurality of passage holes 420 are formed in the web portion 42 at different angular positions, and ribs 421 project outward from the outer surface of the web portion 42.

The web portion 31 of the outer piece 3 can be pushed inward and placed in abutment with the web portion 42 of the inner piece 4 to cover the passage holes 420 when the tubular spout 30 is press fitted into the plug 40. The tubular spout 30 has an outer end portion 301 which extends axially and outwardly of the outer end of the plug 40 so that the plug 40 is entirely received in the tubular spout 30. A radially projecting annular flange 302 is formed at the outer end portion 301 for handling. The annular flange 302 is knurled to avoid slippage during handling. By pulling the annular flange 302, the tubular spout 30 can be removed from the plug 40. The tubular spout 30 may be configured such that the passage confined thereby slightly diverges inward so as to facilitate insertion or separation of the plug 40.

As shown in FIG. 1, after inflating the inflatable 1, the tubular spout 30 of the outer piece 3 is pushed inward to be sleeved on the plug 40, thereby blocking the tubular spout 30 and causing the web portion 31 to abut against the web portion 42 and to cover the passage holes 420. The inflating valve is in a closed position under this situation.

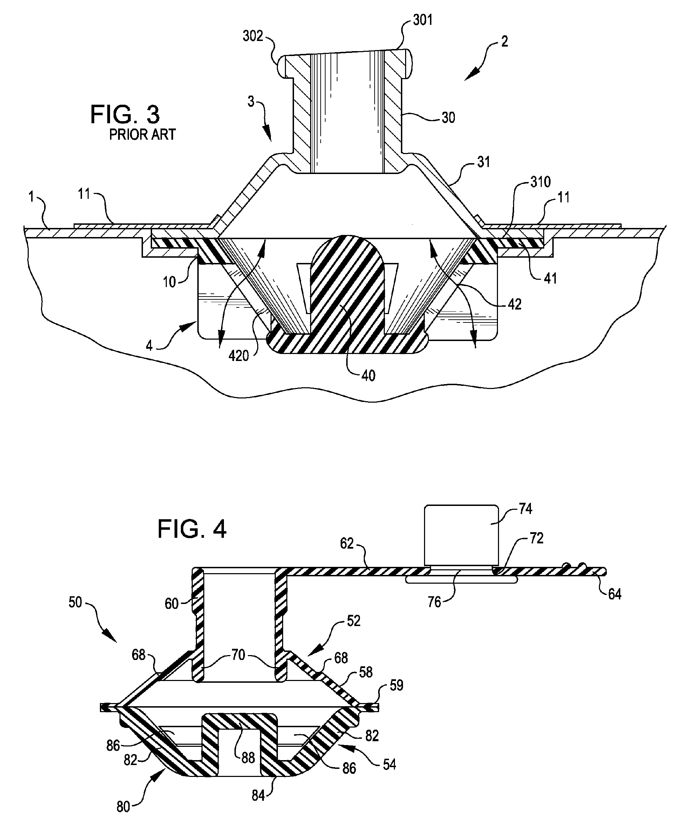

Referring to FIG. 3, when the inflatable is inflated or deflated, the tubular spout 30 is pulled outward and the web portion 31 is separated from the web portion 42, thereby forming a space between the web portions 31 and 42 to communicate the tubular spout 30 and the passage holes 420. The inflating valve is thereby opened and permits air to flow into or out of the inflatable through the tubular spout 30 and the passage holes 420.

As shown in FIG. 3, when the inflating valve is in its closed position, except for a small portion of the tubular spout 30 which protrudes out from the outer surface of the inflatable 1, all other portions of the inflating valve project inwardly from the inner surface of the inflatable 1.

FIG. 4 shows a valve 50 in accordance with an embodiment of the present invention. The valve 50 includes an outer piece 52 and an inner piece 54. The outer piece 52 includes a web portion 58 in the shape of a cone and extending upward from an outer peripheral flange 59 to a spout 60. A flap 62 is attached to one side of the spout 60 and terminates in a pull-tab 64.

In an embodiment, the web portion 58 of the outer piece 52 is sufficiently flexible so that the web portion may be collapsed by a user pressing inward on the spout 60. In an embodiment, the web portion 58 is configured to hold itself in position at this collapsed state and user intervention is required to return the web portion to the extended state shown in FIG. 4. To pull the web portion 58 to this position, the user may grasp the spout 60 or the flap 62 to pull outward on the spout 60.

To collapse the web portion 58, a user may push inward on the spout 60. To aid in the collapsing function, the web portion 58 includes a shelf 68 on an upward tier. To this end, the shelf 68 is at a position at which the web portion 58 folds inward on itself when in the collapsed position. The shelf 68 also contributes to uniform collapsing of the web portion 58 so that the spout 60 aligns with a plug 88 in the inner piece 54.

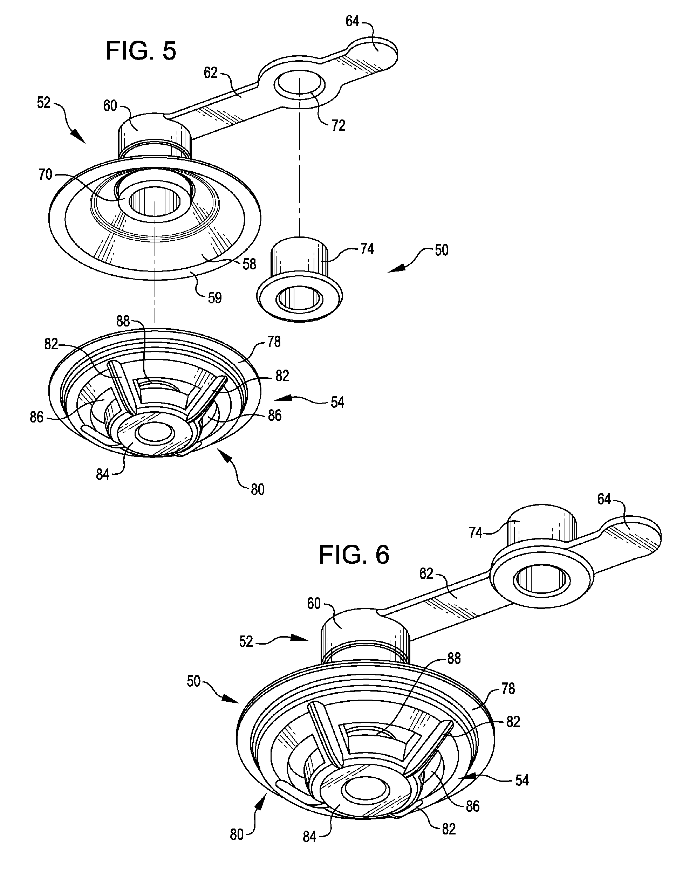

Unlike the prior art valve 2 described above, the valve 50 includes a downwardly extending cylindrical flange 70 (also shown in FIG. 5) that serves as an extension of the interior of the spout 60.

The cylindrical flange 70 adds additional locking power relative to the prior art valve 2 described above. The addition of the flange 70 permits the spout 60 and/or the flange 70 to form firm contact with the plug 88. In an embodiment, the flange 70 is sufficiently thick to provide a firm, airtight connection by itself. Thus, the web portion 58 does not have to collapse as far as the prior art valve 1 for airtight locking of the valve. Pushing the web portion down so that the flange 70 and the spout 60 both have contact with the plug 88 enhances the airtight lock.

As can be seen in FIG. 5, the flap 62 includes an opening 72. This opening 72 is sized to receive a cap 74. The cap 74 includes a grooved annular notch 76 that snaps the cap into place, trapping the flap 62 and holding the cap into position in the opening 72.

The inner piece 54 includes a bottom webbing 80 having spokes 82 leading to a central hub 84. Air openings 86 are provided between the spokes, and provide a path for air when the spout 60 is not connected to the plug 88. The plug 88 extends upward from the central hub 84.

In accordance with an embodiment, the outer piece 52 and the inner piece 54 are both formed of a material that is weldable or heat fusible to the inflatable for which the valve is attached. In an embodiment, the inflatable, the outer piece 52 and the inner piece 54 are all formed of vinyl. The inner piece 54 includes wall thicknesses that allow areas to be more rigid for sealing and fit. For example, the spokes 82, the central hub 84, and the plug 88 are sufficiently thick to maintain the plug in a fixed position. The outer piece 52 includes walls having thicknesses that allow particular areas, such as the spout 60 and the flange 70, to be more rigid, and other areas to be thinner, for example at the web portion 54 and the flap 62.

By forming the outer and inner pieces 52, 54 of material that is weldable to the inflatable, a one step process may be used for attaching the valve 52 to an inflatable product. That is, the peripheral flange 59 of the outer piece 52 may be aligned against an upper or outer portion of the inflatable product, and an outer peripheral flange 78 for the inner piece 54 may be aligned against an inner surface of the inflatable product. The three layers are then welded together. This process is in contrast to the prior art valve 2 described above, in which the inner piece 4 is formed of Acrylonitrile Butadiene Styrene (ABS), and an intermediate layer is attached to the inner piece, and the intermediate layer is then attached to the inflatable 1.

Because the cap 74 is formed separately from the outer piece 52 (and therefore the flap 62), the cap may be formed of a separate material than the outer piece. In an embodiment, the cap is formed of a more rigid material than the outer piece 52, e.g., ABS. Other materials may be used, but preferably the cap 74 is a rigid or semi-rigid material.

A second airtight seal is formed by the cap 74 extending into the top end of the spout 60. The semirigid or rigid material used for the cap 74 permits the cap to maintain consistent pressure outward against the inside edges of the spout 60, thus providing a separate airtight locking function that is independent of the attachment of the spout 60 and flange 70 to the plug 88.

In an embodiment, the cap 74 and the plug 66 may include features that allow the two structures to lock into one another when the valve 50 is closed. For example, one of the cap 74 and the plug 88 may include a ball, with the other having a socket. Other attachment structures may be used, including, but not limited to, snaps, magnets, clips, or other features.

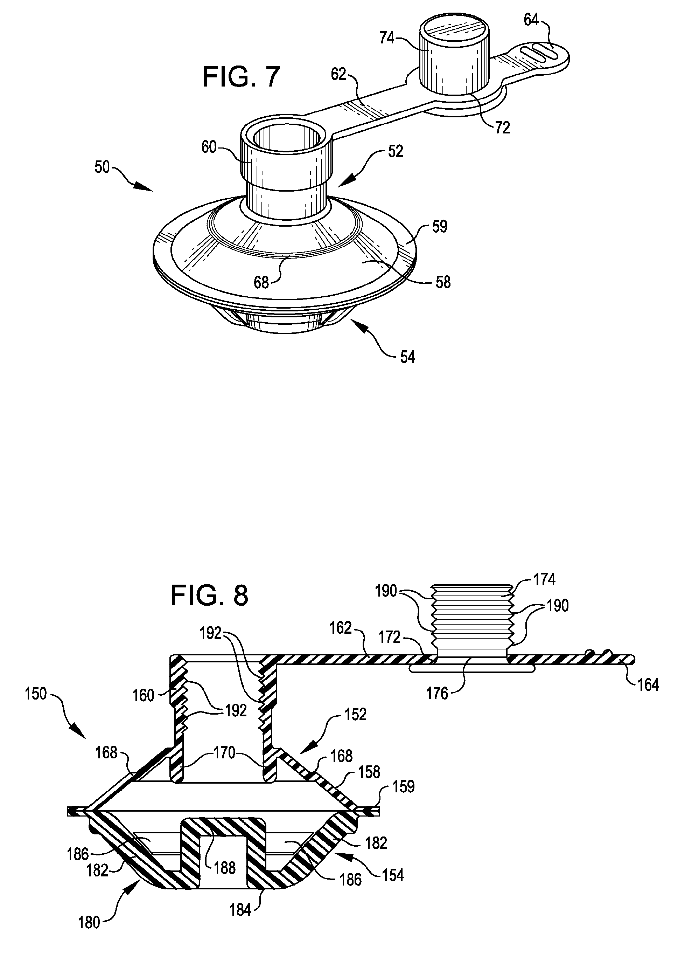

FIG. 8 shows an alternate embodiment of a valve 150, in accordance with an embodiment. The valve 150 may be similar in structure, composition, and function to the valve 50. In particular, the valve 150 may include an outer piece 152 and an inner piece 154. The outer piece 152 may include a web portion 158, an outer peripheral flange 159, and a spout 60. A flap 162 may be included that may terminate in a pull tab 164 and may be attached to the spout 160. The flap 162 may include an opening 172. The web portion 158 may include a shelf 168. The valve 150 may include a cylindrical flange 170 and a cap 174. The inner piece 154, may include a bottom webbing 180 having spokes 182 that lead to a central hub 184, air openings 186, and a plug 188.

The cap 174 may be made from ABS plastic or other suitable materials. As seen in FIG. 8, the cap 174 includes threads 190 running along its outer surface. The spout 160 includes threads 192 running along its inner surface and configured to receive the threads 190 of the cap 174 in a manner such that the cap 174 may be screwed into the spout 160. The cap 174 and spout 160 may alternatively be configured so that the cap 174 has threads running along an inner surface and the spout 160 has threads running along its outer surface, the threads of the spout being configured to receive the threads of the cap 174 so that the cap 174 may be screwed onto the spout 160. In any case case, when the cap 174 is screwed into the spout 160, the threads 190 engage the threads 192 and provide a tight fit so that the cap 174 prevents or resists the flow of air or water between the cap 174 and the spout 160. The threads 190, 192 lock the cap 174 in place.

The valve 150 is operated similarly to the valve 50, as described above. To close the valve 150 of the embodiment shown in FIG. 8, the cap 174 is screwed into the spout 160 and the spout 160 is pressed inward until the valve 150 is in a collapsed state. To open the valve 160, the spout 160 or the flap 162 may be grasped and pulled outward and the cap 174 may be unscrewed from the spout 160.

Other variations are within the scope of the present invention. Thus, while the invention is susceptible to various modifications and alternative constructions, a certain illustrated embodiment thereof is shown in the drawings and has been described above in detail. It should be understood, however, that there is no intention to limit the invention to the specific form or forms disclosed, but on the contrary, the intention is to cover all modifications, alternative constructions, and equivalents falling within the scope of the invention, as defined in the appended claims.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A valve (50, 150) for an inflatable product (1), comprising:
an inner piece (54, 154) comprising a plug;
an outer piece (52, 152), comprising:
a flexible web portion (31) that is collapsible from a first position to a second position;
an opening (72, 172), the opening when the flexible web portion (31) is in the second position being more towards the inner piece (54, 154) of the valve (50, 150) than in the first position, the opening (72, 172) fitting onto the plug (88, 188) on the inner piece (54, 154) when the flexible web portion (31) is in the second position; and
an internal cylindrical flange (70, 170) that extends around the opening (72, 172) and from the outer piece (52, 152) towards the inner piece (54) and that is configured to fit onto the plug (88, 188) when the outer piece (52, 152) is in the second position;
**characterised in that** the flexible web portion (58, 158) includes a shelf (68, 168) on an upward tier.

2. The valve (50, 150) of claim 1, wherein the flexible web portion (31) comprises a flexible cone (58, 158), and wherein the opening (72, 172) comprises a central spout (60, 160) in the flexible cone.

3. The valve (50, 150) of claim 2, further comprising a cap (74, 174) configured to removably attach to the spout (60, 160) so as to prohibit the flow of air through the spout (60, 160).

4. The valve (50, 150) of claim 3, wherein the spout (60, 160) includes a threaded portion and the cap (74, 174) is configured to be threaded to the threaded portion.

5. The valve (50, 150) of claim 4, further comprising a flap (62, 162) connected to the outer piece (52, 152) and connected to the cap (74, 174).

6. The valve (50, 150) of claim 5, wherein the flap (62, 162) comprises an opening (72, 172), and the cap (74, 174) comprises an annular flange (70, 170) for receiving the opening (72, 172).

7. The valve (50, 150) of claim 5, wherein the cap (74, 174) is formed of a first material, and the flap (62, 162) is formed of a second material, and wherein the first material is more rigid than the second material.

8. The valve (50, 150) of claim 1, further comprising a cap (74, 174) configured to removably attach to the opening (72, 172) so as to prohibit the flow of air through the opening (72, 172).

9. The valve (50, 150) of claim 8, wherein the opening (72, 172) includes a threaded portion and the cap (74, 174) is configured to be threaded to the threaded portion.

10. The valve (50, 150) of claim 9, further comprising a flap (52, 152) connected to the outer piece (52, 152) and connected to the cap (74, 174).

11. The valve (50, 150) of claim 10, wherein the flap (62, 162) comprises an opening (72, 172), and the cap (74, 174) comprises an annular flange (70, 170) for receiving the opening (72, 172).

12. The valve (50, 150) of claim 10, wherein the cap (74, 174) is formed of a first material, and the flap (62, 162) is formed of a second material, and wherein the first material is more rigid than the second material.

## Patentansprüche

1. Ventil (50, 150) für ein aufblasbares Produkt (1), Folgendes umfassend:
ein Innenteil (54, 154), einen Stopfen umfassend;
ein Außenteil (52, 152), Folgendes umfassend:
einen flexiblen Gewebeabschnitt (31), der von einer ersten Position in eine zweite Position zusammengeschoben werden kann;
eine Öffnung (72, 172), wobei die Öffnung, wenn der flexible Gewebeabschnitt (31) in der zweiten Position ist, mehr in Richtung des Innenteils (54, 154) des Ventils (50, 150) liegt, als in der ersten Position, wobei die Öffnung (72, 172) auf den Stopfen (88, 188) auf dem Innenteil (54, 154) passt, wenn sich der flexible Gewebeabschnitt (31) in der zweiten Position befindet; und
einen innenliegenden zylindrischen Flansch (70, 170), der sich um die Öffnung (72, 172) herum und aus dem Außenteil (52, 152) heraus in Richtung des Innenteils (54) erstreckt, und der konfiguriert ist, um auf den Stopfen (88, 188) zu passen, wenn sich das Außenteil (52, 152) in der zweiten Position befindet;
**dadurch gekennzeichnet, dass**
der flexible Gewebeabschnitt (58, 158) einen Vorsprung (68, 168) auf einem ansteigenden Wandteil enthält.

2. Ventil (50, 150) nach Anspruch 1, wobei der flexible Gewebeabschnitt (31) einen flexiblen Konus (58, 158) umfasst, und wobei die Öffnung (72, 172) eine zentrale Tülle (60, 160) im flexiblen Konus umfasst.

3. Ventil (50, 150) nach Anspruch 2, darüber hinaus eine Kappe (74, 174) umfassend, die konfiguriert ist, um abnehmbar mit der Tülle (60, 160) verbunden zu werden, um die Luftströmung durch die Tülle (60, 160) hindurch zu verhindern.

4. Ventil (50, 150) nach Anspruch 3, wobei die Tülle (60, 160) einen Gewindeabschnitt enthält und die Kappe (74, 174) konfiguriert ist, um mit dem Gewindeabschnitt verschraubt zu werden.

5. Ventil (50, 150) nach Anspruch 4, darüber hinaus eine Lasche (62, 162) umfassend, die mit dem Außenteil (52, 152) verbunden ist und mit der Kappe (74, 174) verbunden ist.

6. Ventil (50, 150) nach Anspruch 5, wobei die Lasche (62, 162) eine Öffnung (72, 172) umfasst, und die Kappe (74, 174) einen ringförmigen Flansch (70, 170) zur Aufnahme der Öffnung (72, 172) umfasst.

7. Ventil (50, 150) nach Anspruch 5, wobei die Kappe (74, 174) aus einem ersten Material gebildet wird, und die Lasche (62, 162) aus einem zweiten Material gebildet wird, und wobei das erste Material starrer ist, als das zweite Material.

8. Ventil (50, 150) nach Anspruch 1, darüber hinaus eine Kappe (74, 174) umfassend, die konfiguriert ist, um abnehmbar in der Öffnung (72, 172) angebracht zu werden, um die Luftströmung durch die Öffnung (72, 172) zu verhindern.

9. Ventil (50, 150) nach Anspruch 8, wobei die Öffnung (72, 172) einen Gewindeabschnitt enthält und die Kappe (74, 174) konfiguriert ist, um mit dem Gewindeabschnitt verschraubt zu werden.

10. Ventil (50, 150) nach Anspruch 9, darüber hinaus eine Lasche (52, 152) umfassend, die mit dem Außenteil (52, 152) verbunden ist und mit der Kappe (74, 174) verbunden ist.

11. Ventil (50, 150) nach Anspruch 10, wobei die Lasche (62, 162) eine Öffnung (72, 172) umfasst, und die Kappe (74, 174) einen ringförmigen Flansch (70, 170) zur Aufnahme der Öffnung (72, 172) umfasst.

12. Ventil (50, 150) nach Anspruch 10, wobei die Kappe (74, 174) aus einem ersten Material gebildet wird, und die Lasche (62, 162) aus einem zweiten Material gebildet wird, und wobei das erste Material starrer ist, als das zweite Material.

## Revendications

1. Valve (50, 150) pour un produit gonflable (1), comprenant :
une pièce intérieure (54, 154) comprenant un bouchon ;
une pièce extérieure (52, 152), comprenant :
une partie de bande flexible (31) qui peut s'affaisser depuis une première position vers une deuxième position ;
une ouverture (72, 172), l'ouverture, lorsque la partie de bande flexible (31) est dans la deuxième position, étant dirigée plus vers la pièce intérieure (54, 154) de la valve (50, 150) que dans la première position, l'ouverture (72, 172) s'ajustant sur le bouchon (88, 188) sur la pièce intérieure (54, 154) lorsque la partie de bande flexible (31) est dans la deuxième position ; et
une bride cylindrique interne (70, 170) qui s'étend autour de l'ouverture (72, 172) et depuis la pièce extérieure (52, 152) vers la pièce intérieure (54) et qui est configurée pour s'ajuster sur le bouchon (88, 188) lorsque la pièce extérieure (52, 152) est dans la deuxième position ; **caractérisée en ce que**
la partie de bande flexible (58, 158) comporte un support (68, 168) sur un niveau haut.

2. Valve (50, 150) de la revendication 1, dans laquelle la partie de bande flexible (31) comprend un cône flexible (58, 158), et dans laquelle l'ouverture (72, 172) comprend un bec central (60, 160) dans le cône flexible.

3. Valve (50, 150) de la revendication 2, comprenant en outre un capuchon (74, 174) configuré pour se fixer de manière amovible au bec (60, 160) de manière à empêcher l'écoulement d'air à travers le bec (60, 160).

4. Valve (50, 150) de la revendication 3, dans laquelle le bec (60, 160) comporte une partie filetée et le capuchon (74, 174) est configuré pour être vissé sur la partie filetée.

5. Valve (50, 150) de la revendication 4, comprenant en outre un rabat (62, 162) relié à la pièce extérieure (52, 152) et relié au capuchon (74, 174).

6. Valve (50, 150) de la revendication 5, dans laquelle le rabat (62, 162) comprend une ouverture (72, 172), et le capuchon (74, 174) comprend une bride annulaire (70, 170) pour recevoir l'ouverture (72, 172).

7. Valve (50, 150) de la revendication 5, dans laquelle le capuchon (74, 174) est formé d'un premier matériau, et le rabat (62, 162) est formé d'un deuxième matériau, et dans laquelle le premier matériau est plus rigide que le deuxième matériau.

8. Valve (50, 150) de la revendication 1, comprenant en outre un capuchon (74, 174) configuré pour se fixer de manière amovible à l'ouverture (72, 172) de manière à empêcher l'écoulement d'air à travers l'ouverture (72, 172).

9. Valve (50, 150) de la revendication 8, dans laquelle l'ouverture (72, 172) comporte une partie filetée et le capuchon (74, 174) est configuré pour être vissé sur la partie filetée.

10. Valve (50, 150) de la revendication 9, comprenant en outre un rabat (52, 152) relié à la pièce extérieure (52, 152) et relié au capuchon (74, 174).

11. Valve (50, 150) de la revendication 10, dans laquelle le rabat (62, 162) comprend une ouverture (72, 172), et le capuchon (74, 174) comprend une bride annulaire (70, 170) pour recevoir l'ouverture (72, 172).

12. Valve (50, 150) de la revendication 10, dans laquelle le capuchon (74, 174) est formé d'un premier matériau, et le rabat (62, 162) est formé d'un deuxième matériau, et dans laquelle le premier matériau est plus rigide que le deuxième matériau.
